# EUROPEAN PATENT APPLICATION

(11) **EP 4 492 700 A1**
(43) Date of publication of application: **15.01.2025**
(21) Application number: 23184511.6
(22) Date of filing: 10.07.2023
(51) Int. Cl.: H04B 7/026, H04B 7/0413, H04B 7/06, H04B 7/08, H04W 88/06

(54) **NETWORKED SYSTEM FOR A MOBILE DEVICE**

(71) Applicant: Valeo Comfort and Driving Assistance, 94000 Créteil (FR)
(72) Inventor: ASLAM, Zahid, 94000 Créteil (FR)
(74) Representative: Delplanque, Arnaud

(57) **Abstract**

The disclosure notably relates to a networked system. The networked system comprises a first modem. The networked system also comprises a second modem. The networked system also comprises a plurality of antennas. The first modem is connected to the second modem. The first modem and the second modem are co-located. The first modem and the second modem are configured to exchange data so as to dynamically attribute antennas to the first modem and/or the second modem.

## Description

### TECHNICAL FIELD

The disclosure relates to the field of networked systems, in particular for moving devices.

### BACKGROUND

A number of products are offered on the market for mobile communication in moving devices, for example for transmitting and/or receiving information (such as voice or data) from a moving vehicle.

Within this context, there is still a need for an improved networked system.

### SUMMARY

It is therefore provided a networked system. The networked system comprises a first modem. The networked system also comprises a second modem. The networked system also comprises a plurality of antennas. The first modem is connected to the second modem. The first modem and the second modem are co-located. The first modem and the second modem are configured to exchange data so as to dynamically attribute antennas to the first modem and/or the second modem.

The networked system may comprise one or more of the following:
- the data includes channel state information (CSI) and/or tuning information;
- the connection between the first modem and the second modem is a physical connection;
- the physical connection is an Ethernet interface or an SPI interface;
- the connection is a non-physical connection such as a wireless connection;
- the plurality of antennas comprises GSM antennas, 3G antennas, 4G antennas, 5G antennas, Bluetooth antennas, or Wi-Fi antennas;
- the system is for a moving device; and/or
- the moving device is a vehicle.

It is further provided a moving device comprising the system. The moving device may be a vehicle.

It is further provided a method of use of the system or the device. The method of use comprises exchanging data between the first modem and the second modem so as to dynamically attribute antennas to the first modem and/or the second modem.

The method of use may comprise changing dynamically the attribution of antennas between the first modem and the second modem based on the needs of the modems.

### BRIEF DESCRIPTION OF THE DRAWINGS

Non-limiting examples will now be described in reference to the accompanying drawings, where:
- FIG.s 1 and 2 illustrates an example of the system.

### DETAILED DESCRIPTION

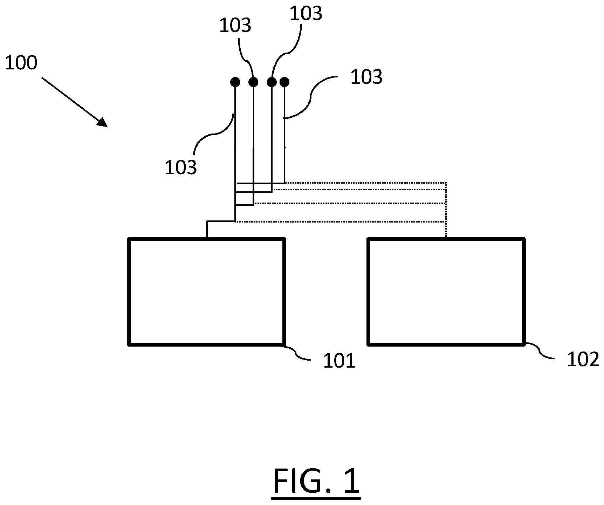

With reference to the diagram of FIG. 1, which shows a diagram illustration of an example of the system, it is proposed a networked system 100. The networked system 100 comprises a first modem 101. The networked system also comprises a second modem 102. The networked system 100 also comprises a plurality of antennas 103. The first modem 101 is connected to the second modem 102. The first modem 101 and the second modem 102 are co-located. The first modem 101 and the second modem 102 are configured to exchange data so as to dynamically attribute antennas 103 to the first modem 101 and/or the second modem 102.

The proposed system constitutes an improved system.

Notably, thanks to the first modem 101 and the second modem 102 being configured to exchange data so as to dynamically attribute antennas, the system improves the robustness (e.g., against malfunctions of at least one antenna or a lack of coverage from the environment) of reception of data from the plurality of antennas to the first modem and/or the second modem. This is all because the system attributes antennas on-the-fly (as the attribution is dynamical), for example based on the needs of the first modem and/or the second modem.

These advantages are particularly emphasized when the system is part of a moving device. Indeed, thanks to the exchange of data so as to dynamically attribute antennas, the system can adaptably attribute antennas as the moving device traverses various changing environments, for example when some of the antennas have restricted signal due to the moving device being on an area with poor coverage or when the vehicle is upside down, as discussed hereinafter.

It is further provided a moving device comprising the system. The moving device may be a vehicle, for example an automotive vehicle (such as a car or truck) or a motorcycle.

The system 100 may be for a moving device. That is, the system may be installed in the moving device, for example by means of mechanical attachments or installed in a processing board, or as part of a computer system inside the moving device. The system may be configured to exchange data (for example, voice or multimedia data) with the computer system inside the moving device. The system 100 may be connected to the computer system via a communication interface, for example an automotive-specific communication interface. The system 100 may have a dimension compatible with the components of the vehicle, for example a dimension allowing inserting the modems inside the board of the vehicle. The antennas may be configured for installation outside the moving device, *e.g.* outside the vehicle, *e.g.* on the roof or body thereof.

The moving device may be a vehicle, for example an automotive vehicle (such as a car or truck) or a motorcycle. For example, in the case of the moving device being an automotive vehicle, the modems may be placed inside the vehicle while the antennas may be placed above the roof of the vehicle. In the case of a motorcycle, the modems and the antennas may be placed with the computer mounted on the motor's front or alternative at any other place of the motorcycle.

It is further provided a method of use of the system or the device. The method of use comprises exchanging data between the first modem and the second modem so as to dynamically attribute antennas to the first modem and/or the second modem. The method may attribute one or more antennas to the first modem or to the second model or change the attribution of the antennas, for example the method may change the attribution of an antenna attributed to the first modem to the second modem, or vice-versa.

The method of use may comprise changing dynamically the attribution of antennas between the first modem and the second modem based on the needs of the modems. For example, the method of use may determine that antennas attributed to the first modem (respectively second modem) have a weak reception signal, for example due to the antennas being blocked by a covered area or due to bad atmospheric conditions, or in a scenario in which the antennas are physically blocked due to an accident e.g., in the case of an accident and in which part of the plurality of antennas are on the ground. The method may determine whether the antennas attributed to the second modem have a reception signal stronger than the antennas attributed to the first modem. In such a case, the method may change the attribution of the antennas based on the needs of the second modem, that is, by changing the attribution of the antennas, attributed to the second modem, to the first modem. The first modem and the second modem may have different hardware, software or applications. For example, the first modem 101 may comprise an emergency call (eCall) feature. An antenna attributed to the first modem 101 may for example be disconnected in an accident. An antenna attributed to the modem 102 may then be switched to modem 101.

The method of use may also comprise, in real time, monitoring the needs of the modems. The method may in real time, detect a change of the needs of the first modem or the second modem. By change of needs it is meant any situation which modifies the requirements of data transmission from one of the first modem or the second modem, for example, a need to improve signal reception on one of the modems, for example in case of an emergency, or a situation in which the already attributed antennas do not have available signal or in case in which the antennas are occluded by environment occlusion. The method may in real time, detect the attributions of the antennas to either the first modem or the second modem, for example at the time of the detection of the change. In response of the change of needs, the method may in real time, calculate an attribution of antennas so as to satisfy the change of needs. For example, the method may calculate that one additional antenna (or more, for example four antennas) is necessary for satisfying the needs of one of the modems. The method may in real time perform the exchange of data between the first modem and the second modem so as to attribute the antennas (from the first modem to the second modem or vice-versa) based on the calculated attribution of antennas. For example, the exchanged data may change one antenna (from the plurality, for example four antennas) from the first modem to the second modem or all of the antennas (for example, the four antennas). The method may in real-time re-attribute the antennas to the modems based on the calculated attribution. The method may in real time, re-iterate the above steps and return to the monitoring after changing the attribution. This allows to re-route one of the modems to an available antenna, or the one or more antennas having the best connection.

As the method of use changes dynamically the attribution of antennas, the method of use ensures that the first modem (respectively second modem) still has coverage in case in which the attributed antennas have a weak reception signal. For example, in case of an accident in which the moving vehicle is turned upside-down, the method of use ensures that a respective modem (of one of the first or second modems) still has a signal reception so as to send voice or other data, e.g., for performing an emergency call. In other examples, the method may offload transmission of data from one modem to the other, thereby improving the flow of traffic of data exchanged through the antennas.

The networked system 100 may be configured for performing communications from a moving device. The first modem 101 and the second modem 102 may be configured for exchanging information between an external entity (for example a communication server or a operator network) and the moving vehicle through the plurality of antennas 103. The networked system 100 may be placed inside the moving vehicle, for example inside the console of an automotive vehicle, over the hood of the automotive vehicle, inside the dashboard, a A or C pillars, trunk, under the seats, inside or under the roof.

The first modem 101 and the second modem 102 may be mobile phone modems configured for performing communications with an operator network, for example through SIM registration.

The networked system 103 comprises a plurality of antennas, for example two or more, e.g., 6 or more. In examples, the networked system 104 may comprise 8 antennas in case of 5G/cellular antennas. 4 antennas may be used for each kind of antennas in which case only switching is needed. In that same setup if only 2 or 4 antennas are available for cost optimization reasons, sharing/switching use cases can be applied. In examples, the networked system may comprise a plurality of antennas configured for transmitting data on different wireless communications, for example Bluetooth, WiFi , Bluetooth Low Energy, or V2X. In such examples, the networked system may comprise 15 antennas or more. The plurality of antennas may be placed on the moving vehicle, for instance fixed at a location of the moving vehicle such as the hood of the vehicle. The antennas may be connected to the first and/or second modem through a wired connection.

The plurality of antennas (103) may comprise GSM antennas, 3G antennas, 4G antennas, 5G antennas, Bluetooth antennas or WiFi antennas. In such a case the first modem and/or the second modem may be configured to communicate with a GSM operator network when the plurality of antennas comprises GSM antennas, a 3G operator network when the plurality of antennas comprises 3G antennas, a 4G operator network when the plurality of antennas comprises 4G antennas or a 5G operator network when the plurality of antennas comprises 5G antennas.

The first modem 101 and the second modem 102 are co-located. In other words, the spatial disposition (for example fixed in the moving vehicle) of the first modem 101 with respect to the second modem 102 is substantially similar and within the area of placement of the antennas on the moving vehicle. The first and second modems are for example adjacent one to the other and within the area of collocation of the antennas. For example, the modems may be placed under the antennas.

The first modem 101 and the second modem 102 are configured to exchange data so as to dynamically attribute antennas to the first modem 101 and/or the second modem 102. The data may comprise data for changing the attribution of an antenna (for example just one or one or more) between the first modem 101 and the second modem 102, for example an attribution of an antenna attributed to the first modem 101 to be attributed to the second modem 102. By "dynamically attribute" it is meant the method may change the attribution of an antenna between the first modem 101 and the second modem 102 upon a change of a predetermined condition, for example a condition based on the needs of the modems.

This improves the robustness of reception of data by the system. Indeed, on one hand, as the first modem 101 and the second modem 102 are connected, the exchange of data between these may be performed without interferences of external entities such as environmental noise. On the other hand, as the first modem 101 and the second modem 102 exchange data so as to dynamically attribute antennas to the first modem 101 and/or the second modem 102, the system responds dynamically to the modems needs. For example, antennas not used by the second modem 102 may be used by the modem 101 so as to improve the reception of data. In one example, the first modem 101 may be configured to communicate to an operator and the second modem 102 may be configured to communicate to another operator network. The first modem 101 may associate antennas attributed from the second modem 102 to the first modem 101 so that such antennas are configured to exchange data to the operator network of the first modem 101. In another example, the first modem 101 and the second modem 102 may be configured to communicate to the same operator network. In such a case, one of the first or the second modem may establish exchange of data with the operator network and exchange it with the other modem, thereby reducing the need of performing repetitive requests to the network. For example, such requests may occur during "peak" load, there may be a connection request by both modems due to the colocation, or for example in the replication of signaling/control information, e.g. a CSI parameter is not needed for both modems; such data may be shared between the two modems.

The data may include channel state information (CSI) and/or tuning information. By channel state information it is meant any kind of data indicative of the location of one of the modems in the environment (e.g., the spatial location in a geographical environment). In other words, the channel state information comprises channel properties of a communication link. The CSI may describe how a signal propagates from the transmitter to the receiver and represents the combined effect of, for example, scattering, fading, and power decay with distance. The CSI makes it possible to adapt transmissions to current channel conditions, so as to achieve reliable communication with high data rates in multiantenna systems.

The CSI may comprise two levels: The first level is called instantaneous CSI (or short-term CSI), which is data meaning that the current channel conditions are known, which can be viewed as knowing the impulse response of a digital filter. The second level is called statistical CSI (or long-term CSI), which is data meaning that a statistical characterization of the channel is known. This description can include, for example, the type of fading distribution, the average channel gain, the line-of-sight component, and the spatial correlation.

The tuning information may comprise any kind of parameters directed to the operator network specifying the situation of a given user of the system.

The system thus makes available the channel state information and/or tunning information to the first modem 101 (from the second modem 202) or vice versa. This reduces the number of exchanges to the operator network. Extending the concept to V2X, the number of messages (key parameter) may reduce significantly in case of V2V communication.

The connection between the first modem 101 and the second modem 102 may be a physical connection. By "physical connection" it is meant that the first modem 101 and the second modem 102 are linked through a wire or other conductive material using a communication protocol. The physical connection may be an Ethernet interface and/or an SPI (Serial Peripheral Interface) interface. The Ethernet interface may be used to perform all data related operations like providing data connection with the network operator and the SPI interface may be used to do all state management functions like turning the NAD2 on.

The physical connection between the first modem 101 and the second modem 102 may be in a master-slave configuration. By "master-slave configuration" it is meant an asymmetric communication between the first modem 101 and the second modem 102 where one of the first modem 101 or the second modem 102 (called "master modem") serves as a communication hub of the other modem (called "slave modem"), that is, the master modem is configured to handle all of the exchange of information to the operator network and exchange the data with the slave modem through their connection. In such master-slave configuration, the master modem may have assigned all of the plurality of the antennas.

The connection may be a non-physical connection such as a wireless connection. The wireless connection may comprise for example a WI-FI or a Bluetooth connection.

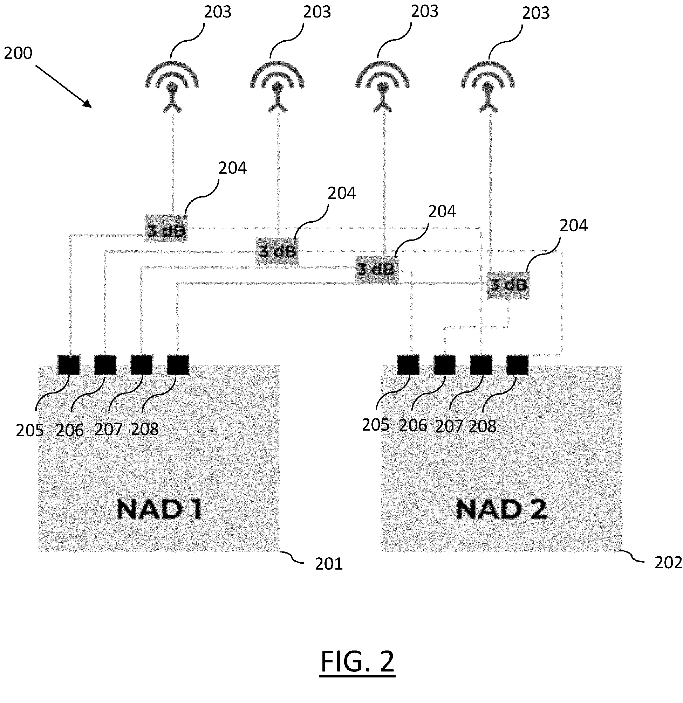

Examples of the system are now discussed with reference to FIG. 2.

FIG. 2 illustrates an implementation of the system 200 mounted in a moving device (not shown). The system 200 comprises a first modem 201 (also referred to as NAD1), a second modem 202 (also referred to as NAD2) and four antennas 203. The antennas are connected to the modems via 3db filters, a switch or splitter 204 and ports TRx_0 205, TRx_1 206, DRx_0 207, DRx_1 208. The first modem 201 is connected to the second modem 202. The first modem 201 and the second modem 202 are co-located. The first modem 201 and the second modem 202 are configured to exchange data so as to dynamically attribute antennas to the first modem 201 and/or the second modem 202.

The NAD1201 shares its channel state information and tuning parameters with NAD2 202. Further, due to the exchanging mechanism between the antennas available (for e.g. 4 total) achieved by the dynamical exchange, NAD1 201 or the NAD2 202 can achieve better performance by utilizing all 4 antennas when the other NAD is idle. Due to the sharing of CSI and tuning information, load is reduced on both of the modems 201, 202. This in turn helps to offload the use of antennas for the modem NAD2 (respectively NAD1), enabling NAD1 (respectively NAD2) to achieve peak performance.

The system thus makes available the channel state information (CSI) and other tuning parameters from the NAD1 201 to the NAD2 202. The NAD2 202 does not require to request this information from the network. If the NAD1 201 has more antennas, more accurate channel estimations will be available to the NAD2 202. Sharing antenna resources also guarantees better performance with limited resources between the modems 201, 202.

In addition, tuning and channel state information between the operator network and the modems 201, 202 are reduced as both are in the same moving device.

## Claims

1. A networked system (100) comprising:
- a first modem (101);
- a second modem (102);
- a plurality of antennas (103);
The first modem (101) being connected to the second modem (102), the first modem (101) and the second modem (102) being co-located, and
The first modem (101) and the second modem (102) being configured to exchange data so as to dynamically attribute antennas to the first modem (101) and/or the second modem (102).

2. The system of claim 1, the data including channel state information (CSI) and/or tuning information.

3. The system of claim 1 or 2, the connection between the first modem (101) and the second modem (102) being a physical connection.

4. The system of claim 3, wherein the physical connection is an Ethernet interface or an SPI interface.

5. The system of claim 1 or 2, wherein the connection is a non-physical connection such as a wireless connection.

6. The system of any one of claims 1 to 5, wherein the plurality of antennas (103) comprises GSM antennas, 3G antennas, 4G antennas, 5G antennas, Bluetooth antennas or Wi-Fi antennas.

7. The system of any one of claims 1 to 6, wherein the system is for a moving device.

8. The system of claim 7, wherein the moving device is a vehicle.

9. A moving device comprising the system of any one of claims 1 to 8.

10. The device of claim 9, wherein the moving device is a vehicle.

11. A method of use of the system of any one of claims 1 to 8 or the device of claim 9 or 10, comprising exchanging data between the first modem and the second modem so as to dynamically attribute antennas to the first modem and/or the second modem.

12. The method of claim 11, comprising changing dynamically the attribution of antennas between the first modem and the second modem based on the needs of the modems.
